# EUROPÄISCHE PATENTSCHRIFT

(11) **EP 3 190 023 B1**
(45) Veröffentlichungstag und Bekanntmachung des Hinweises auf die Patenterteilung: **29.07.2020**
(21) Anmeldenummer: 16199366.2
(22) Anmeldetag: 17.11.2016
(51) Int. Cl.: B60W 30/165, G05D 1/02

(54) **VERFAHREN, FÜHRUNGSFAHRZEUG UND LASTKRAFTWAGEN ZUM AUFFAHREN AUF UND ABFAHREN VON EINER AUTOBAHN DURCH DEN LASTKRAFTWAGEN**
METHOD, LEADING VEHICLE AND TRUCK FOR DRIVING ON AND DEPARTING FROM A MOTORWAY BY THE TRUCK
PROCÉDÉ, VOITURE DE GUIDAGE ET POIDS LOURD DESTINÉS À FAIRE ENTRER ET SORTIR LE POIDS LOURD D'UNE AUTOROUTE

(30) Priorität: 06.01.2016 DE 102016200049
(43) Veröffentlichungstag der Anmeldung: 12.07.2017
(73) Patentinhaber: Volkswagen Aktiengesellschaft, 38440 Wolfsburg (DE)
(72) Erfinder: Bartels, Arne, 38448 Wolfsburg (DE)

(56) Entgegenhaltungen:
- DE-A1- 10 024 739
- DE-A1- 19 743 024

## Beschreibung

Die Erfindung betrifft ein Verfahren, ein Führungsfahrzeug und einen Lastkraftwagen zum Auffahren auf und Abfahren von einer Autobahn durch den Lastkraftwagen.

Moderne Lastkraftwagen können in der Zukunft voraussichtlich fahrerlos auf Autobahnen fahren. Den Speditionen verspricht dieses ein sehr hohes Einsparpotential aufgrund der Reduzierung von Personalkosten. Auf Land- und Stadtstraßen können Lastkraftwagen hingegen auch in der Zukunft voraussichtlich nicht automatisch fahren und bedürfen dort immer noch eines menschlichen Fahrers. Um das fahrerlose Fahren von Lastkraftwagen auf der Autobahn zu realisieren, müssen die Lastkraftwagen daher von dem menschlichen Fahrer zur Autobahn gefahren werden. Dort verlässt der Fahrer den Lastkraftwagen, welcher dann seine Fahrt automatisiert ohne eine Führung durch den menschlichen Fahrer auf der Autobahn fortsetzt. Verlässt der Lastkraftwagen die Autobahn wieder, wird die Führung wieder an den menschlichen Fahrer übergeben.

Es ist dabei denkbar, dass Lastkraftwagen von einem Fahrer auf einen speziellen Rastplatz mit kontrollierter Umgebung (z.B. keine Fußgänger) gefahren werden. Dort steigt der Fahrer aus dem Lastkraftwagen aus und aktiviert die automatisierte Fahrt. Der Lastkraftwagen fährt dann fahrerlos und automatisiert auf die Autobahn auf, bewältigt die zu fahrende Strecke alleine, und fährt am Ende der Reise wiederum auf einen speziellen Rastplatz, wo der Lastkraftwagen automatisiert und fahrerlos geparkt wird. Dort steigt wiederum ein Fahrer in den Lastkraftwagen ein, um ihn über Land- und Stadtstraßen zum Reiseziel zu fahren. Diese speziellen Rastplätze fungieren also als Relaisstationen zwischen dem geführten und dem automatisierten Fahrten.

Dieses Verfahren erscheint jedoch aufgrund der speziell erforderlichen Infrastrukturmaßnahmen - in Deutschland, in Europa und idealerweise weltweit müssten die Autobahnen mit diesen speziellen Relaisstationen ausgestattet werden - als extrem aufwändig. Eine zeitgleiche Ausstattung aller Autobahnen mit solchen Relaisstationen erscheint daher als unwahrscheinlich. Hierdurch können die technisch aufwändig ausgestatteten und daher teuren, automatisiert fahrenden Lastkraftwagen anfangs nur auf wenigen Autobahnen genutzt werden.

Dies beeinträchtigt die Wirtschaftlichkeit solcher Lastkraftwagen für die Speditionen, was diesen Lösungsansatz unattraktiv macht. Zudem werden Infrastrukturmaßnahmen an Autobahnen in der Regel von der öffentlichen Hand finanziert. Ob die öffentliche Hand solche speziellen Relaisstationen überhaupt finanzieren darf, von denen in direkter Weise nur die Speditionen profitieren, erscheint fraglich.

Aus der DE 100 24 739 A1 ist eine Kolonnenfahr-Steuervorrichtung bekannt, die eine Kolonnenfahrt mit einem Führungsfahrzeug und zumindest einem dem Führungsfahrzeug automatisch folgenden Folgerfahrzeug erlaubt, wobei ein Fahrzeug eine Vorrichtung aufweist, um eine Anforderung zum Trennen von oder sich Anschließen an die Kolonne zu dem Führungsfahrzeug zu senden, das Führungsfahrzeug eine Vorrichtung aufweist, um die Anforderung von dem einen Fahrzeug zu erlauben oder zurückzuweisen, und wobei, wenn das Führungsfahrzeug die Anforderung erlaubt, das eine Fahrzeug durch eine Modusschaltvorrichtung zwischen Automatikfahrt, in dem das Folgerfahrzeug dem Führungsfahrzeug automatisch folgt, und manueller Fahrt durch einen Fahrer geschaltet wird.

Aus der US 6 640 164 B1 ist ein Verfahren und ein System zur Fernsteuerung von Fahrzeugen mit Eigenantrieb bekannt, umfassend ein Führungsfahrzeug und mindestens ein Folgefahrzeug, welches hinter dem führenden Fahrzeug angeordnet ist. Das Führungsfahrzeug durchläuft einen Wegpunkt, bestimmt einen ersten Satz von GPS-Koordinaten zu diesem Wegpunkt und überträgt den ersten Satz von GPS-Koordinaten an das Folgefahrzeug. Das Folgefahrzeug bestimmt einen zweiten Satz von GPS-Koordinaten korrespondierend mit seiner eigenen Position und vergleicht den ersten Satz von GPS-Koordinaten mit dem zweiten Satz von GPS-Koordinaten. Durch Steuern der Lenkungs-, Antriebs- und Bremssysteme des Folgefahrzeuges mittels eines Servoantriebs wird das Folgefahrzeug zu dem Wegpunkt durch Minimierung der Differenz zwischen dem ersten und dem zweiten Satz von GPS-Koordinaten geführt. Dieses Verfahren wird bei einer Aufeinanderfolge von Wegpunkten wiederholt, so dass das Folgefahrzeug die gleiche Strecke wie die des Führungsfahrzeugs abfährt. Auf die beschriebene Weise wird eine elektronische Deichsel ausgebildet.

Aus der DE 10 2014 013 672 A1 ist ein Verfahren zur Absicherung eines autonomen oder teilautonomen Betriebs von Fahrzeugen auf einem Verkehrsstreckennetz bekannt, bei dem ein oder mehrere Fahrzeuge das Verkehrsstreckennetz befahren, die Fahrzeuge jeweils Sensoren zur Erfassung einer Umgebung, eine digitale Straßenkarte des Verkehrsstreckennetzes, eine Kommunikationseinheit zur Kommunikation mit einem externen Server und eine Auswerteeinheit aufweisen. Das beschriebene Verfahren zeichnet sich dadurch aus, dass die Auswerteeinheit auf Basis der erfassten Umgebung und der digitalen Straßenkarte für eine vom jeweiligen Fahrzeug zurückgelegte Strecke eine Information zur Geeignetheit dieser Strecke für einen autonomen oder teilautonomen Betrieb von Fahrzeugen ermittelt, die Auswerteeinheit die Information mittels der Kommunikationseinheit an den externen Server übermittelt, der externe Server eine Erlaubnisinformation zur Zulässigkeit der Strecke für den autonomen oder teilautonomen Betrieb von Fahrzeugen abhängig von der Information ermittelt, und der externe Server die Erlaubnisinformation an die Fahrzeuge übermittelt.

Aus der DE 10 2011 012 551 A1 sind große Schwerlastkraftwagen in Bergbaubetrieben bekannt, welche zum Abtransport von Erdmaterial vorgesehen sind. Zum Steuern dieser Schwerlastkraftwagen wird eine Fahrzeugkombination aus einem fahrergesteuerten Leitfahrzeug und aus mindestens einem virtuell angekoppelten, fahrerlosen Schwerlastkraftwagen beschrieben. Weitergehend werden Einsatzmethoden, wie auch das Kolonnenfahren, für diese Fahrzeugkombinationen vorgeschlagen.

Der Erfindung liegt somit das Problem zu Grunde, ein Verfahren, einen Lastkraftwagen und ein Führungsfahrzeug zum Auffahren auf und Abfahren von einer Autobahn durch den Lastkraftwagen zu schaffen, bei der ein Übergang zwischen einem geführten Fahren und einem automatisierten Fahren verbessert ist.

Die technische Aufgabe wird erfindungsgemäß durch ein Verfahren mit den Merkmalen des Patentanspruchs 1, ein Führungsfahrzeug mit den Merkmalen des Patentanspruchs 9 und ein Lastkraftwagen mit den Merkmalen des Patentanspruchs 10 gelöst. Vorteilhafte Ausgestaltungen der Erfindung ergeben sich aus den Unteransprüchen.

Insbesondere wird ein Verfahren zum Auffahren auf und Abfahren von einer Autobahn durch einen Lastkraftwagen zur Verfügung gestellt, umfassend die folgenden Schritte zum Auffahren auf die Autobahn: Bereitstellen eines Führungsfahrzeuges, Ausbilden eines Fahrzeugverbundes durch Ankoppeln des Führungsfahrzeuges an den Lastkraftwagen am Beginn eines Übergabebereichs, geführtes Auffahren auf die Autobahn, Ändern eines Betriebsmodus des Lastkraftwagens von einem geführten Betriebsmodus in einen automatisierten Betriebsmodus, Auflösen des Fahrzeugverbundes durch Abkoppeln des Führungsfahrzeuges von dem Lastkraftwagen am Ende des Übergabebereiches; und zum Abfahren von der Autobahn: Bereitstellen eines Führungsfahrzeuges, Ausbilden eines Fahrzeugverbundes durch Ankoppeln des Führungsfahrzeuges an den Lastkraftwagen am Beginn eines weiteren Übergabebereichs, Ändern eines Betriebsmodus des Lastkraftwagens von einem automatisierten Betriebsmodus in einen geführten Betriebsmodus, geführtes Abfahren von der Autobahn, Auflösen des Fahrzeugverbundes durch Abkoppeln des Führungsfahrzeuges von dem Lastkraftwagen am Ende des weiteren Übergabebereichs.

Das geführte Auffahren auf die Autobahn kann dabei je nach Ausführungsform vor oder nach dem Ausbilden des entsprechenden Fahrzeugverbundes durchgeführt werden. Entsprechend kann das geführte Abfahren von der Autobahn je nach Ausführungsform nach oder vor dem Auflösen des entsprechenden Fahrzeugverbundes durchgeführt werden.

Ferner wird ein zugehöriges Führungsfahrzeug zum Auffahren auf und Abfahren von einer Autobahn in einem Fahrzeugverbund mit einem Lastkraftwagen geschaffen, wobei das Führungsfahrzeug derartig ausgebildet ist, zum Auffahren auf die Autobahn am Beginn eines Übergabebereichs an den Lastkraftwagen anzukoppeln und nach Ändern des Betriebsmodus des Lastkraftwagens von einem geführten Betriebsmodus in einen automatisierten Betriebsmodus am Ende des Übergabebereichs wieder abzukoppeln; und zum Abfahren von der Autobahn am Beginn eines weiteren Übergabebereichs an den Lastkraftwagen anzukoppeln und nach Ändern des Betriebsmodus des Lastkraftwagen von dem automatisierten Betriebsmodus in den geführten Betriebsmodus am Ende des Übergabebereichs wieder abzukoppeln.

Entsprechend wird ein zugehöriger Lastkraftwagen zum Auffahren auf und Abfahren von einer Autobahn in einem Fahrzeugverbund mit einem Führungsfahrzeug geschaffen, wobei der Lastkraftwagen einen geführten Betriebsmodus und einen automatisierten Betriebsmodus aufweist und derartig ausgebildet ist, zum Auffahren auf die Autobahn am Beginn eines Übergabebereichs an das Führungsfahrzeug anzukoppeln und nach Ändern des Betriebsmodus des Lastkraftwagen von dem geführten Betriebsmodus in den automatisierten Betriebsmodus am Ende des Übergabebereichs wieder abzukoppeln; und zum Abfahren von der Autobahn am Beginn eines weiteren Übergabebereichs an das Führungsfahrzeug anzukoppeln und nach Ändern des Betriebsmodus des Lastkraftwagen von dem automatisierten Betriebsmodus in den geführten Betriebsmodus am Ende des Übergabebereichs wieder abzukoppeln.

Das Führungsfahrzeug und der Lastkraftwagen bilden einen erfindungsgemäßen Fahrzeugverbund, welcher temporär ausgebildet und wieder aufgelöst werden kann. Das Führungsfahrzeug selber kann beispielsweise durch einen Fahrer gesteuert werden. Prinzipiell kann das Führungsfahrzeug aber auch automatisiert oder teilautomatisiert gesteuert werden.

Der Vorteil des Verfahrens und des zugehörigen Führungsfahrzeuges und Lastkraftwagens ist, dass das Auffahren und Abfahren auf bzw. von einer Autobahn durch den Lastkraftwagen flexibel und kostengünstig gestaltet werden kann und somit verbessert ist. Ein Verkehrsfluss wird somit reibungsloser und flüssiger ausgestaltet.

In einer Ausführungsform ist vorgesehen, dass der Beginn des Übergabebereichs vor einer Autobahnauffahrt positioniert ist, wobei das Auffahren auf die Autobahn durch das Führungsfahrzeug gesteuert wird, und wobei das Ende des Übergabebereichs auf der Autobahn positioniert ist, und wobei der Beginn des weiteren Übergabebereichs auf der Autobahn vor einer Autobahnausfahrt positioniert ist, wobei das Abfahren von der Autobahn durch das Führungsfahrzeug gesteuert wird, und wobei das Ende des weiteren Übergabebereichs hinter der Autobahnausfahrt positioniert ist.

Das Ankoppeln findet dann beispielsweise außerhalb der Autobahn auf einem Rastplatz oder Betriebshof statt. Der Fahrer verlässt nach dem Ankoppeln den Lastkraftwagen. Anschließend führt das vorausfahrende Führungsfahrzeug den folgenden, fahrerlosen Lastkraftwagen im Fahrzeugverbund auf die Autobahn. Auf der Autobahn angekommen wird der Betriebsmodus des Lastkraftwagens von dem geführten Betriebsmodus in den automatisierten Betriebsmodus geändert und das Führungsfahrzeug wird wieder vom Lastkraftwagen abgekoppelt, so dass der Fahrzeugverbund aufgelöst wird. Der Lastkraftwagen setzt seine Fahrt auf der Autobahn danach selbständig und automatisiert fort.

Zum Abfahren von der Autobahn wird die Reihenfolge der Verfahrensschritte in umgekehrter Reihenfolge durchgeführt. Das Führungsfahrzeug koppelt auf der Autobahn an den Lastkraftwagen an. Anschließend wird der Betriebsmodus des Lastkraftwagens von dem automatisierten Betriebsmodus in den geführten Betriebsmodus geändert und das Führungsfahrzeug führt den Lastkraftwagen beim Abfahren von der Autobahn. Das Abkoppeln findet dann beispielsweise außerhalb der Autobahn wieder auf einem Rastplatz oder Betriebshof statt. Dort steigt ein Fahrer in den Lastkraftwagen und fährt den Lastkraftwagen auf Land- und Stadtstraßen weiter bis zum Reiseziel.

In einer weiteren Ausführungsform ist vorgesehen, dass der Beginn des Übergabebereiches und der Beginn des weiteren Übergabebereiches jeweils auf einem Rastplatz oder einem speziell dafür vorgesehenen Platz an der Autobahn positioniert sind, wobei das Auffahren auf die Autobahn und das Abfahren von der Autobahn im Fahrzeugverbund jeweils von dem Führungsfahrzeug gesteuert werden.

Das Ankoppeln findet dann beispielsweise auf dem Rastplatz oder dem speziell dafür vorgesehenen Platz statt. Der Fahrer verlässt nach dem Ankoppeln den Lastkraftwagen. Anschließend führt das vorausfahrende Führungsfahrzeug den folgenden, fahrerlosen Lastkraftwagen im Fahrzeugverbund auf die Autobahn. Auf der Autobahn angekommen wird der Betriebsmodus des Lastkraftwagens von dem geführten Betriebsmodus in den automatisierten Betriebsmodus geändert und das Führungsfahrzeug wird wieder vom Lastkraftwagen abgekoppelt, so dass der Fahrzeugverbund aufgelöst wird. Der Lastkraftwagen setzt seine Fahrt auf der Autobahn danach selbständig und automatisiert fort.

Zum Abfahren von der Autobahn wird die Reihenfolge der Verfahrensschritte in umgekehrter Reihenfolge durchgeführt. Das Führungsfahrzeug koppelt auf der Autobahn an den Lastkraftwagen an. Anschließend wird der Betriebsmodus des Lastkraftwagens von dem automatisierten Betriebsmodus in den geführten Betriebsmodus geändert und das Führungsfahrzeug führt den Lastkraftwagen beim Abfahren von der Autobahn auf den Rastplatz oder den speziell dafür vorgesehenen Platz. Auf dem Rastplatz oder dem speziell dafür vorgesehenen Platz wird das Führungsfahrzeug wieder von dem Lastkraftwagen abgekoppelt und der Fahrzeugverbund wird aufgelöst. Ein Fahrer steigt in den Lastkraftwagen und fährt den Lastkraftwagen auf Land- und Stadtstraßen weiter bis zum Reiseziel.

In einer anderen Ausführungsform ist vorgesehen, dass der Übergabebereich und der weitere Übergabebereich auf der Autobahn positioniert sind. Das Ankoppeln erfolgt dann auf der Autobahn. Der Lastkraftwagen wird von einem Fahrer geführt auf die Autobahn gelenkt. Dort wird der Betriebsmodus des Lastkraftwagens vom geführten Betriebsmodus auf den automatisierten Betriebsmodus geändert. Der Lastkraftwagen setzt seine Fahrt auf der Autobahn anschließend automatisiert fort. Vor einem Abfahren von der Autobahn werden die Verfahrensschritte des Verfahrens entsprechend in umgekehrter Reihenfolge durchgeführt. Ein Führungsfahrzeug koppelt vor der Abfahrt auf der Autobahn an den Lastkraftwagen an und der Betriebsmodus des Lastkraftwagens wird von dem automatisierten Betriebsmodus in den geführten Betriebsmodus geändert. Der Fahrer führt den Lastkraftwagen anschließend von der Autobahn ab und setzt die Fahrt über Land- und Stadtstraßen bis zum Reiseziel fort.

In einer Weiterbildung ist ferner vorgesehen, dass der Fahrzeugverbund derartig ausgebildet wird, dass ein Fahrer zwischen dem Führungsfahrzeug und dem Lastkraftwagen durch Umsteigen während der Fahrt hin- und herwechseln kann, wobei der Fahrer nach dem Auffahren auf die Autobahn und dem Ändern des geführten Betriebsmodus in den automatisierten Betriebsmodus von dem Lastkraftwagen in das Führungsfahrzeug umsteigt, und wobei ein Fahrer vor dem Abfahren von der Autobahn und dem Ändern des automatisierten Betriebsmodus in den geführten Betriebsmodus von dem Führungsfahrzeug aus in den Lastkraftwagen umsteigt. Der Lastkraftwagen kann dazu beispielsweise eine nach vorne in Richtung des Führungsfahrzeuges weisende Tür und das Führungsfahrzeug eine entsprechend nach hinten in Richtung des Lastkraftwagen weisende Tür aufweisen. Der Fahrer kann dann nach Ändern des Betriebsmodus vom Lastkraftwagen in das Führungsfahrzeug bzw. vom Führungsfahrzeug in den Lastkraftwagen umsteigen. Dies hat den Vorteil, dass der Fahrer während der automatisierten Fahrt auf der Autobahn nicht im Führerhaus sein muss und somit frei wird für andere Tätigkeiten.

In einer Ausführungsform ist vorgesehen, dass das Ausbilden und Auflösen des Fahrzeugverbundes ein Kommunizieren und/oder Koordinieren von Fahrmanövern des Lastkraftwagen und des Führungsfahrzeuges über eine Fahrzeug-zu-Fahrzeug-(V2V)-Schnittstelle umfasst. Über die Fahrzeug-zu-Fahrzeug-(V2V)-Schnittstelle können Informationen ausgetauscht werden, welche notwendig sind zum Koordinieren der Fahrmanöver des Lastkraftwagens und des Führungsfahrzeuges. Dabei werden die Fahrmanöver so koordiniert, dass der Fahrzeugverbund auf sichere Weise und gemäß den geltenden Verkehrsregeln ausgebildet wird. Insbesondere ist die V2V-Schnittstelle als Drahtlosschnittstelle ausgebildet.

In einer Ausführungsform ist vorgesehen, dass der Lastkraftwagen und das Führungsfahrzeug zum Ausbilden des Fahrzeugverbunds mechanisch miteinander verbunden werden. Dies kann beispielsweise über eine mechanische Deichsel realisiert werden.

In einer weiteren Ausführungsform ist vorgesehen, dass der Lastkraftwagen und das Führungsfahrzeug zum Ausbilden des Fahrzeugverbunds in Form einer elektronischen Deichsel miteinander verbunden werden. Bei einer solchen elektronischen Deichsel wird keine mechanische Verbindung ausgebildet, sondern es wird lediglich eine logische Kopplung des Führungsfahrzeuges mit dem Lastkraftwagen mit Hilfe von Elektronik und einer computerbasierten Steuerung erreicht. Dabei steuert das Führungsfahrzeug die Fahrmanöver des Lastkraftwagens derart, dass der Lastkraftwagen dem Führungsfahrzeug wie bei einer mechanischen Kopplung durch eine mechanische Deichsel folgt. Die Elektronik kann dabei Sensoren und Steuereinrichtungen, beispielsweise zur Umfelderfassung, Abstandmessung und Mustererkennung aufweisen. Das Führungsfahrzeug und der Lastkraftwagen verhalten sich im Fahrzeugverbund dann weitgehend so, als ob eine mechanische Verbindung vorhanden wäre.

In einer weiteren Ausführungsform ist vorgesehen, dass der Lastkraftwagen in einen sicheren Zustand gesteuert wird, wenn das Auffahren auf die Autobahn oder das Abfahren von der Autobahn oder das Ausbilden des Fahrzeugverbundes fehlschlägt. Beispielsweise kann der Lastkraftwagen dann automatisiert auf einen Standstreifen der Autobahn gefahren werden und dort bis zum Stillstand abgebremst werden. Auf diese Weise wird gewährleistet, dass die Verkehrssicherheit stets gewährleistet ist und ein Ankoppeln des Führungsfahrzeuges gegebenenfalls unter verbesserten Bedingungen, das heißt bei ruhendem Lastkraftwagen, erneut versucht werden kann.

In einer weiteren Ausführungsform ist insbesondere vorgesehen, dass das Bereitstellen des jeweiligen Führungsfahrzeuges von einer zentralen Leitstelle aus koordiniert und/oder gesteuert wird. Dies ermöglicht eine verbesserte zentrale Koordination, auch bei einem Vorhandensein von mehreren Lastkraftwagen und mehreren Führungsfahrzeugen. So kann ein Lastkraftwagen beispielsweise durch Auswerten einer geplanten Reisestrecke feststellen, dass ein Abschnitt der Reisestrecke über eine Autobahn zurückgelegt werden soll. Rechtzeitig vor Erreichen dieses Abschnitts wird dann der zentralen Leitstelle kommuniziert, dass für die entsprechende Auffahrt auf die Autobahn ein Führungsfahrzeug benötigt wird. Die zentrale Leitstelle schickt dann ein freies Führungsfahrzeug an einen vorbestimmten oder verabredeten Platz, wo das oben beschriebene Verfahren durchgeführt wird. Entsprechend fordert der Lastkraftwagen automatisch vor dem Abfahren von der Autobahn ein weiteres Führungsfahrzeug an, welches koordiniert von der zentralen Leitstelle bereitgestellt wird. Durch die Koordination durch die zentrale Leitstelle wird ein reibungsloser und flüssiger Verkehrsfluss ohne Verzögerungen und große Pausen ermöglicht. Dies spart Aufwand, Zeit und Kosten.

Nachfolgend wird die Erfindung anhand bevorzugter Ausführungsbeispiele unter Bezugnahme auf die Figuren näher erläutert. Hierbei zeigen:
- Fig. 1a: eine schematische Darstellung einer Ausführungsform eines Fahrzeugverbundes aus einem Lastkraftwagen und einem Führungsfahrzeug mit einer elektronischen Deichsel, wobei der Lastkraftwagen eine Zugmaschine ohne Fahrerkabine aufweist;
- Fig. 1b: eine schematische Darstellung einer weiteren Ausführungsform eines Fahrzeugverbundes aus einem Lastkraftwagen und einem Führungsfahrzeug mit einer elektronischen Deichsel, wobei der Lastkraftwagen eine Zugmaschine mit Fahrerkabine aufweist;
- Fig. 1c: eine schematische Darstellung einer weiteren Ausführungsform eines Fahrzeugverbundes aus einem Lastkraftwagen und einem Führungsfahrzeug, wobei der Lastkraftwagen eine Zugmaschine mit Fahrerkabine aufweist und das Führungsfahrzeug und der Lastkraftwagen über eine mechanische Verbindung miteinander verbunden sind;
- Fig. 2: eine schematische Darstellung einer Ausführungsform des Verfahrens, wobei lediglich das Auffahren auf eine Autobahn durch den Lastkraftwagen im Fahrzeugverbund gezeigt ist;
- Fig. 3: eine schematische Darstellung einer Ausführungsform des Verfahrens, wobei lediglich das Abfahren von einer Autobahn durch den Lastkraftwagen im Fahrzeugverbund gezeigt ist;
- Fig. 4a: eine schematische Darstellung einer Ausführungsform des Verfahrens, wobei lediglich das Auffahren auf eine Autobahn durch den Lastkraftwagen gezeigt ist und eine mechanische Verbindung zwischen dem Führungsfahrzeug und dem Lastkraftwagen ausgebildet wird;
- Fig. 4b: eine schematische Darstellung einer Ausführungsform des Verfahrens, wobei lediglich das Abfahren von der Autobahn durch den Lastkraftwagen gezeigt ist und eine mechanische Verbindung zwischen dem Führungsfahrzeug und dem Lastkraftwagen ausgebildet wird;
- Fig. 5: ein schematisches Ablaufdiagramm des Verfahrens.

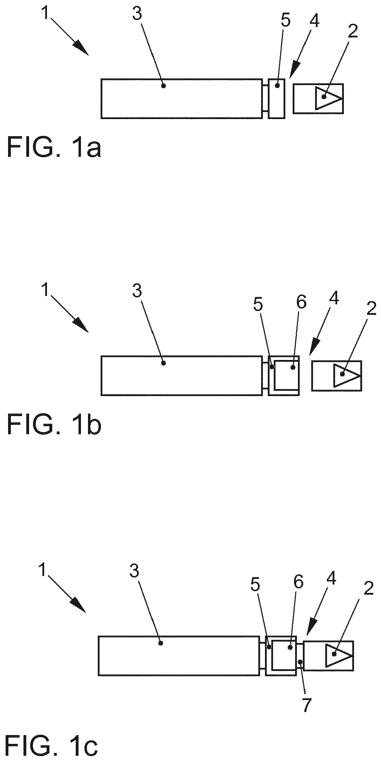

Die Figuren 1a, 1b und 1c zeigen schematische Ausführungsformen eines Fahrzeugverbundes 1 aus einem Führungsfahrzeug 2 und einem Lastkraftwagen 3. Fig. 1a zeigt dabei eine schematische Darstellung einer Ausführungsform eines Fahrzeugverbundes 1, bei dem der Lastkraftwagen 3 und das Führungsfahrzeug 2 mittels einer elektronischen Deichsel 4, also ohne mechanische Verbindung, miteinander verbunden sind. Die elektronische Deichsel 4 ist dabei eine Fahrzeug-zu-Fahrzeug-(V2V)-Datenverbindung, über die das Führungsfahrzeug 2 und der Lastkraftwagen 3 miteinander kommunizieren und ihre Fahrmanöver miteinander abstimmen, so dass eine weitgehend synchrone Fahrt durchgeführt werden kann. Der Lastkraftwagen 3 weist in dieser Ausführungsform eine Zugmaschine 5 ohne Fahrerkabine auf.

Fig. 1b zeigt eine schematische Darstellung einer weiteren Ausführungsform eines Fahrzeugverbundes 1, bei dem der Lastkraftwagen 3 und das Führungsfahrzeug 2 mittels einer elektronischen Deichsel 4, also ohne mechanische Verbindung, miteinander verbunden sind. Der Lastkraftwagen 3 weist in dieser Ausführungsform eine Zugmaschine 5 mit Fahrerkabine 6 auf.

Fig. 1c zeigt eine schematische Darstellung einer weiteren Ausführungsform eines Fahrzeugverbundes 1, bei dem der Lastkraftwagen 3 und das Führungsfahrzeug 2 mittels einer mechanischen Deichsel 7 physisch verbunden sind. Der Lastkraftwagen 3 weist eine Zugmaschine 5 mit Fahrerkabine 6 auf.

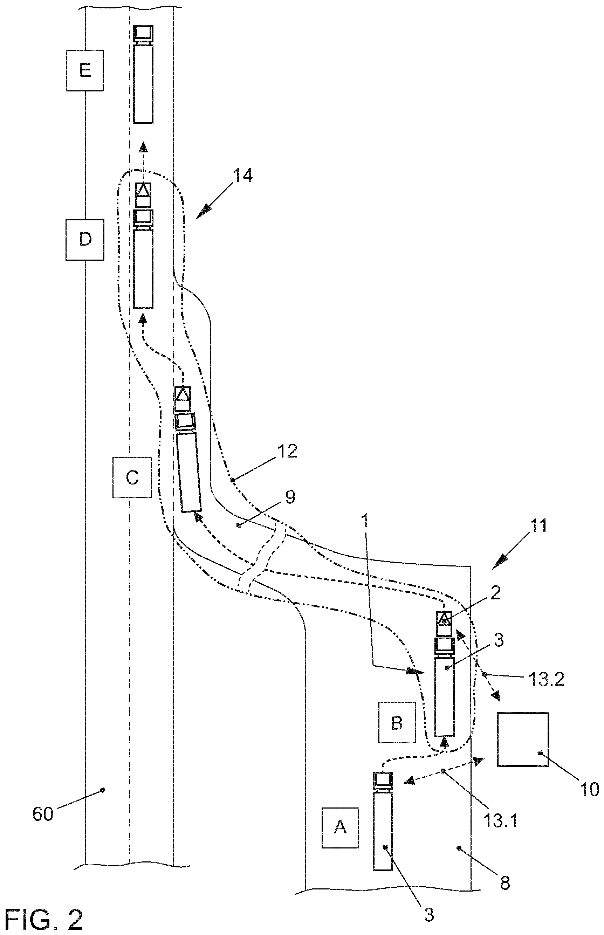

Fig. 2 zeigt eine schematische Darstellung des Verfahrens, wobei lediglich das Auffahren eines Lastkraftwagens 3 im Fahrzeugverbund 1 mit einem Führungsfahrzeug 2 auf eine Autobahn 60 gezeigt ist. Der Lastkraftwagen 3 wird von einem menschlichen Fahrer bis zu einem dazu vorgesehenen Platz gefahren, beispielsweise einem Betriebshof 8 (Schritt A). Da dem Lastkraftwagen 3 eine weitere Wegstrecke bekannt ist, und eine Autobahnauffahrt 9, sowie eine automatisierte Fahrt auf der Autobahn 60 unmittelbar bevorstehen, fordert dieser ein Führungsfahrzeug 2 über eine Datenverbindung 13.1 bei einer zentralen Leitstelle 10 an. Die zentrale Leitstelle 10 veranlasst über eine weitere Datenverbindung 13.2, dass ein Führungsfahrzeug 2 zum Beginn 11 eines Übergabebereichs 12 gefahren wird, beispielsweise durch einen menschlichen Fahrer. Am Beginn 11 des Übergabebereichs 12 wird das Führungsfahrzeug 2 an den Lastkraftwagen 3 angekoppelt, beispielsweise über eine elektronische Deichsel. Durch das Ankoppeln wird ein Fahrzeugverbund 1 aus Lastkraftwagen 3 und Führungsfahrzeug 2 gebildet (Schritt B). Der menschliche Fahrer steigt nach dem Ankoppeln aus dem Lastkraftwagen 3 aus. Anschließend wird der Lastkraftwagen 3 im Fahrzeugverbund 1 durch das Führungsfahrzeug 2 geführt (Schritt C). Das Führungsfahrzeug 2 selber wird dabei beispielsweise von einem menschlichen Fahrer gesteuert. Das Führungsfahrzeug 2 führt den Fahrzeugverbund 1 vom Betriebshof 8 bis zu einem Ende 14 des Übergabebereichs 12, wobei der Übergabebereich 12 eine Auffahrt 9 der Autobahn 60 umfasst und das Ende 14 des Übergabebereichs 12 auf der Autobahn 60 liegt. Auf der Autobahn 60 wird ein Betriebsmodus des Lastkraftwagens 3 von einem geführten Betriebsmodus in einen automatisierten Betriebsmodus geändert. Der Lastkraftwagen 3 fährt dann automatisiert auf der Autobahn 60. Am Ende 14 des Übergabebereichs 12 wird das Führungsfahrzeug 2 von dem Lastkraftwagen 3 abgekoppelt und der Fahrzeugverbund 1 wird aufgelöst (Schritt D). Das Führungsfahrzeug 2 und der Lastkraftwagen 3 trennen sich, der Lastkraftwagen 3 setzt die automatisierte Fahrt auf der Autobahn 60 alleine fort (Schritt E). Das Führungsfahrzeug 2 entfernt sich von dem Lastkraftwagen 2 und wird von der zentralen Leitstelle 10 an einem anderen Ort eingesetzt, um beispielsweise einen weiteren Lastkraftwagen in einem weiteren Fahrzeugverbund auf die Autobahn 60 aufzufahren oder von der Autobahn 60 abzufahren.

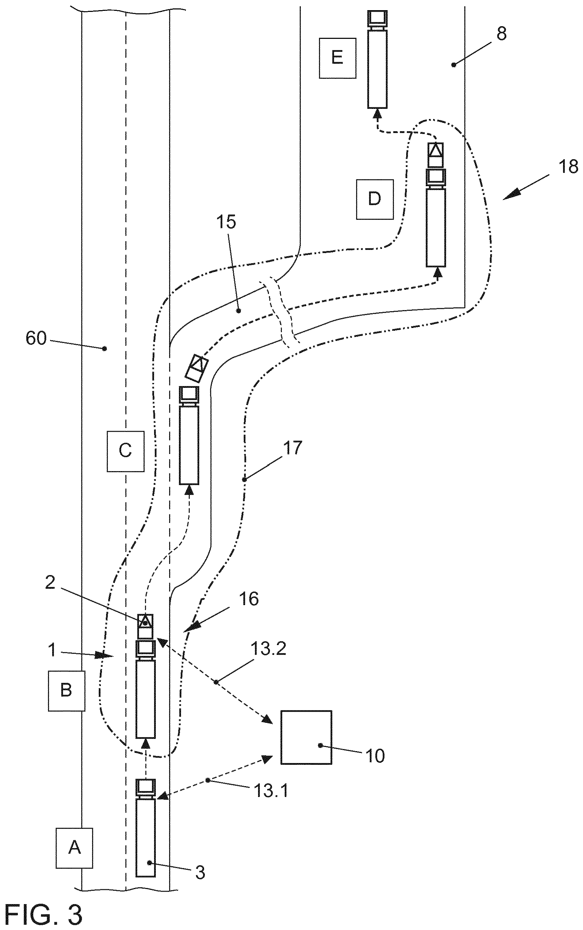

Fig.3 zeigt eine schematische Darstellung des Verfahrens, wobei lediglich das Abfahren eines Lastkraftwagens 3 im Fahrzeugverbund 1 mit einem Führungsfahrzeug 2 von einer Autobahn 60 gezeigt ist. Der Lastkraftwagen 3 befindet sich im automatisierten Betriebsmodus und fährt automatisiert auf der Autobahn 60 (Schritt A). Da dem Lastkraftwagen 3 die weitere Wegstrecke bekannt ist, und eine Autobahnabfahrt 15 und eine geführte Fahrt unmittelbar bevorstehen, fordert es über eine Datenverbindung 13.1 bei einer zentralen Leitstelle 10 ein Führungsfahrzeug 2 an. Die zentrale Leitstelle 10 veranlasst über eine weitere Datenverbindung 13.2, dass das Führungsfahrzeug 2 zum Beginn 16 eines weiteren Übergabebereichs 17 gefahren wird, beispielsweise durch einen menschlichen Fahrer. Am Beginn 16 des weiteren Übergabebereichs 17 wird das Führungsfahrzeug 2 an den Lastkraftwagen 3 angekoppelt, beispielsweise über eine elektronische Deichsel (Schritt B). Durch das Ankoppeln wird ein Fahrzeugverbund 1 aus Lastkraftwagen 3 und Führungsfahrzeug 2 gebildet. Anschließend wird der Lastkraftwagen 3 im Fahrzeugverbund 1 durch das Führungsfahrzeug 2 geführt. Das Führungsfahrzeug 2 selber wird dabei beispielsweise weiterhin von dem menschlichen Fahrer gesteuert. Nach dem Ankoppeln wird der Betriebsmodus des Lastkraftwagens 3 von einem automatisierten Betriebsmodus in einen geführten Betriebsmodus geändert. Das Führungsfahrzeug 2 führt dann den Fahrzeugverbund 1 von der Autobahn 60 bis zu einem Ende 18 des weiteren Übergabebereichs 17 (Schritt C), wobei der weitere Übergabebereich 17 eine Abfahrt 15 der Autobahn 60 umfasst und das Ende 18 des weiteren Übergabebereichs 17 auf einem Betriebshof 8 liegt. Am Ende 18 des weiteren Übergabebereichs 17 wird das Führungsfahrzeug 2 von dem Lastkraftwagen 3 abgekoppelt und der Fahrzeugverbund 1 wird wieder aufgelöst (Schritt D). Das Führungsfahrzeug 2 entfernt sich von dem Lastkraftwagen 3 und steht weiteren geführten Fahrmanövern mit anderen Lastkraftwagen zur Verfügung. Ein menschlicher Fahrer steigt in den Lastkraftwagen 3 ein und fährt diesen über Land- und Stadtstraßen zum Reiseziel (Schritt E).

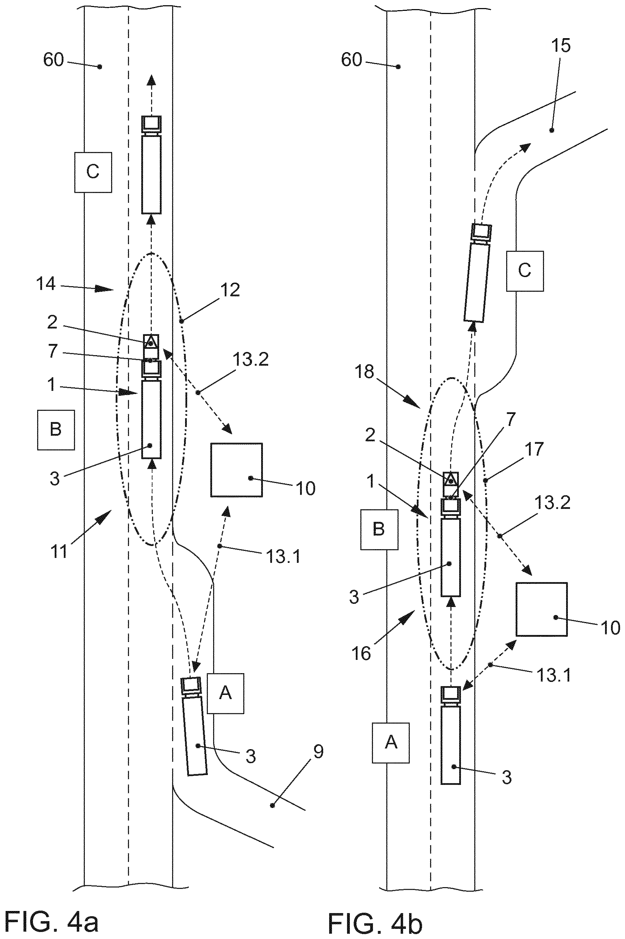

Fig. 4a zeigt eine schematische Darstellung einer Ausführungsform des Verfahrens, wobei lediglich das Auffahren eines Lastkraftwagens 3 auf eine Autobahn gezeigt ist. In der Ausgangsituation (Schritt A) wird der Lastkraftwagen 3 von einem menschlichen Fahrer über eine Auffahrt 9 auf die Autobahn 60 gefahren. Automatisch oder durch den menschlichen Fahrer wird ein Führungsfahrzeug 2 bei einer zentralen Leitstelle 10 über eine Datenverbindung 13.1 angefordert. Die zentrale Leitstelle 10 stellt ein Führungsfahrzeug 2 bereit, welches über eine weitere Datenverbindung 13.2 angefordert und beauftragt wird. Das Führungsfahrzeug 2 nähert sich anschließend (Schritt B) dem Lastkraftwagen 3 und koppelt am Beginn 11 eines Übergabebereichs 12 an diesen durch Ausbilden einer mechanischen Verbindung mit einer mechanischen Deichsel 7 an, so dass das Führungsfahrzeug 2 und der Lastkraftwagen 3 einen Fahrzeugverbund 1 ausbilden. Ist der Fahrzeugverbund 1 ausgebildet, steigt der menschliche Fahrer aus dem Lastkraftwagen 3 in das Führungsfahrzeug 2 um, beispielsweise über eine nach vorne weisende Tür am Lastkraftwagen 3 und eine nach hinten in Richtung des Lastkraftwagen 3 weisende Tür am Führungsfahrzeug 2. Ist der menschliche Fahrer umgestiegen, so wird der Betriebsmodus des Lastkraftwagens 3 von dem geführten Betriebsmodus in einen automatisierten Betriebsmodus geändert. An einem Ende 14 des Übergabebereichs wird das Führungsfahrzeug 2 von dem Lastkraftwagen 3 abgekoppelt und der Fahrzeugverbund 1 aufgelöst. Der Lastkraftwagen 3 fährt dann automatisiert allein weiter auf der Autobahn 60 (Schritt C). Der menschliche Fahrer wird danach mit dem Führungsfahrzeug 2 zu einem vorgegebenen Platz gefahren, beispielsweise einem Rastplatz.

Fig. 4b zeigt eine schematische Darstellung einer Ausführungsform des Verfahrens, wobei lediglich das Abfahren eines Lastkraftwagens 3 von einer Autobahn 60 gezeigt ist. In der Ausgangsituation (Schritt A) wird der Lastkraftwagen 3 automatisiert ohne menschlichen Fahrer auf der Autobahn 60 gefahren. Da die weitere Reiseroute ein Abfahren an der nächsten Abfahrt 15 der Autobahn 60 vorsieht, wird von dem Lastkraftwagen 3 über eine Datenverbindung 13.1 ein Führungsfahrzeug 2 bei einer zentralen Leitstelle 10 angefordert. Die zentrale Leitstelle 10 stellt dann ein Führungsfahrzeug 2 bereit, welches über eine weitere Datenverbindung 13.2 angefordert und beauftragt wird. Das Führungsfahrzeug 2 nähert sich anschließend (Schritt B) dem Lastkraftwagen 3 und koppelt am Beginn 16 eines weiteren Übergabebereichs 17 an diesen durch Ausbilden einer mechanischen Verbindung mit einer mechanischen Deichsel 7 an, so dass das Führungsfahrzeug 2 und der Lastkraftwagen 3 einen Fahrzeugverbund 1 ausbilden. Ist der Fahrzeugverbund 1 ausgebildet, steigt ein menschlicher Fahrer aus dem Führungsfahrzeug 2 in den Lastkraftwagen 3 um, beispielsweise über eine nach hinten in Richtung des Lastkraftwagen 3 weisende Tür am Führungsfahrzeug 2 und eine nach vorne weisende Tür am Lastkraftwagen 3. Ist der menschliche Fahrer umgestiegen, so wird der Betriebsmodus des Lastkraftwagens 3 von dem automatisierten Betriebsmodus in einen geführten Betriebsmodus geändert. Das Führungsfahrzeug 2 wird am Ende 18 des weiteren Übergabebereichs 17 von dem Lastkraftwagen 3 abgekoppelt und der Fahrzeugverbund 1 aufgelöst. Der menschliche Fahrer führt den Lastkraftwagen 3 danach über die Abfahrt 15 von der Autobahn 60 hinunter und fährt über Land- und Stadtstraßen bis zum Reiseziel (Schritt C).

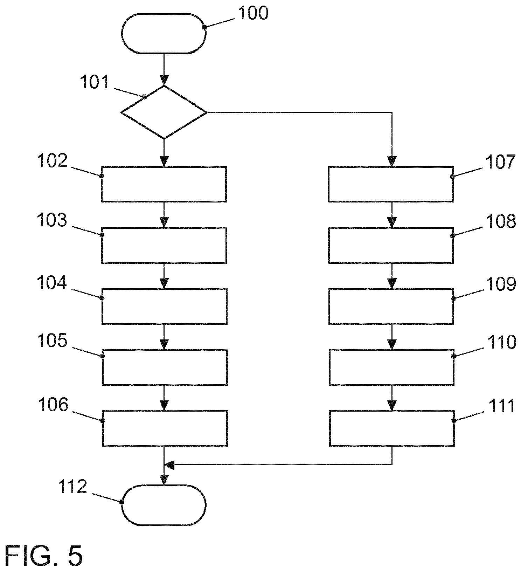

In Fig. 5 ist ein schematisches Ablaufdiagramm des Verfahrens gezeigt. Das Verfahren wird gestartet 100, wenn ein Auffahren auf eine Autobahn oder ein Abfahren von einer Autobahn bevorsteht. In einem ersten Verfahrensschritt 101 wird überprüft, ob es sich um ein Auffahren oder ein Abfahren handelt. Handelt es sich um ein Auffahren auf eine Autobahn, so wird im nächsten Verfahrensschritt 102 ein Führungsfahrzeug bereitgestellt. Dies kann beispielsweise über eine zentrale Leitstelle koordiniert werden. Anschließend 103 wird ein Fahrzeugverbund durch Ankoppeln des Führungsfahrzeugs an den Lastkraftwagen ausgebildet. Ist der Fahrzeugverbund ausgebildet, so wird der Lastkraftwagen im nächsten Schritt 104 von dem Führungsfahrzeug auf die Autobahn geführt. Ist das Auffahren auf die Autobahn abgeschlossen, so wird ein Betriebsmodus des Lastkraftwagens von einem geführten Betriebsmodus in einen automatisierten Betriebsmodus umgeschaltet 105. Im letzten Schritt 106 wird der Fahrzeugverbund wieder aufgelöst durch Abkoppeln des Führungsfahrzeuges von dem Lastkraftwagen. Damit ist das Verfahren beendet 112.

Ergibt der Verfahrensschritt 101 hingegen, dass es sich um ein Abfahren von einer Autobahn handelt, so wird im nächsten Verfahrensschritt 107 ein Führungsfahrzeug bereitgestellt. Dies kann beispielsweise über eine zentrale Leitstelle koordiniert werden. Anschließend 108 wird ein Fahrzeugverbund durch Ankoppeln des Führungsfahrzeugs an den Lastkraftwagen während der Fahrt auf der Autobahn ausgebildet. Ist der Fahrzeugverbund ausgebildet, so wird ein Betriebsmodus des Lastkraftwagens von einem automatisierten Betriebsmodus in einen geführten Betriebsmodus umgeschaltet 109. Danach 110 führt das Führungsfahrzeug den Lastkraftwagen im Fahrzeugverbund und fährt von der Autobahn ab. Im letzten Schritt 111 wird der Fahrzeugverbund wieder aufgelöst durch Abkoppeln des Führungsfahrzeuges von dem Lastkraftwagen. Der Lastkraftwagen wird dann beispielsweise von einem menschlichen Fahrer weitergeführt. Damit ist das Verfahren beendet 112.

### Bezugszeichenliste

- 1: Fahrzeugverbund
- 2: Führungsfahrzeug
- 3: Lastkraftwagen
- 4: elektronische Deichsel
- 5: Zugmaschine
- 6: Fahrerkabine
- 7: mechanische Deichsel
- 8: Betriebshof
- 9: Autobahnauffahrt
- 10: zentrale Leitstelle
- 11: Beginn des Übergabebereichs
- 12: Übergabebereich
- 13.1: Datenverbindung
- 13.2: weitere Datenverbindung
- 14: Ende des Übergabebereichs
- 15: Autobahnabfahrt
- 16: Beginn des weiteren Übergabebereichs
- 17: weiterer Übergabebereich
- 18: Ende des weiteren Übergabebereichs
- 60: Autobahn
- 100-112: Verfahrensschritte

## Patentansprüche

1. Verfahren zum Auffahren auf und Abfahren von einer Autobahn (60) durch einen Lastkraftwagen (3), umfassend die folgenden Schritte:
- zum Auffahren auf die Autobahn (60):
Bereitstellen eines Führungsfahrzeuges (2),
Ausbilden eines Fahrzeugverbundes (1) durch Ankoppeln des Führungsfahrzeuges (2) an den Lastkraftwagen (3) am Beginn (11) eines Übergabebereichs (12),
geführtes Auffahren auf die Autobahn (60),
Ändern eines Betriebsmodus des Lastkraftwagens (3) von einem geführten Betriebsmodus in einen automatisierten Betriebsmodus,
Auflösen des Fahrzeugverbundes (1) durch Abkoppeln des Führungsfahrzeuges (2) von dem Lastkraftwagen (3) am Ende (14) des Übergabebereiches (12); und
- zum Abfahren von der Autobahn (60):
Bereitstellen eines Führungsfahrzeuges (2),
Ausbilden eines Fahrzeugverbundes (1) durch Ankoppeln des Führungsfahrzeuges (2) an den Lastkraftwagen (3) am Beginn (16) eines weiteren Übergabebereichs (17),
Ändern eines Betriebsmodus des Lastkraftwagens (3) von einem automatisierten Betriebsmodus in einen geführten Betriebsmodus,
geführtes Abfahren von der Autobahn (60),
Auflösen des Fahrzeugverbundes (1) durch Abkoppeln des Führungsfahrzeuges (2) von dem Lastkraftwagen (3) am Ende (18) des weiteren Übergabebereichs (17).

2. Verfahren nach Anspruch 1, **dadurch gekennzeichnet, dass** der Beginn (11) des Übergabebereichs (12) vor einer Autobahnauffahrt (9) positioniert ist, wobei das Auffahren auf die Autobahn (60) durch das Führungsfahrzeug (2) gesteuert wird, und wobei das Ende (14) des Übergabebereichs (12) auf der Autobahn (60) positioniert ist, und wobei der Beginn (16) des weiteren Übergabebereichs (17) auf der Autobahn (60) vor einer Autobahnausfahrt (15) positioniert ist, wobei das Abfahren von der Autobahn (60) durch das Führungsfahrzeug (2) gesteuert wird, und wobei das Ende (18) des weiteren Übergabebereichs (17) hinter der Autobahnausfahrt (15) positioniert ist.

3. Verfahren nach Anspruch 1, **dadurch gekennzeichnet, dass** der Beginn (11) des Übergabebereiches (12) und der Beginn (16) des weiteren Übergabebereiches (17) jeweils auf einem Rastplatz oder einem speziell dafür vorgesehenen Platz an der Autobahn (60) positioniert sind, wobei das Auffahren auf die Autobahn (60) und das Abfahren von der Autobahn (60) im Fahrzeugverbund (1) jeweils von dem Führungsfahrzeug (2) gesteuert werden.

4. Verfahren nach Anspruch 1, **dadurch gekennzeichnet, dass** der Übergabebereich (12) und der weitere Übergabebereich (17) auf der Autobahn (60) positioniert sind.

5. Verfahren nach einem der vorangegangenen Ansprüche, **dadurch gekennzeichnet, dass** der Fahrzeugverbund (1) derartig ausgebildet wird, dass ein Fahrer zwischen dem Führungsfahrzeug (2) und dem Lastkraftwagen (3) durch Umsteigen während der Fahrt hin- und herwechseln kann, wobei der Fahrer nach dem Auffahren auf die Autobahn (60) und dem Ändern des geführten Betriebsmodus in den automatisierten Betriebsmodus von dem Lastkraftwagen (3) in das Führungsfahrzeug (2) umsteigt, und wobei ein Fahrer vor dem Abfahren von der Autobahn (60) und dem Ändern des automatisierten Betriebsmodus in den geführten Betriebsmodus von dem Führungsfahrzeug (2) aus in den Lastkraftwagen (3) umsteigt.

6. Verfahren nach einem der vorangegangenen Ansprüche, **dadurch gekennzeichnet, dass** das Ausbilden und Auflösen des Fahrzeugverbundes (1) ein Kommunizieren und/oder Koordinieren von Fahrmanövern des Lastkraftwagen (3) und des Führungsfahrzeuges (2) über eine Fahrzeug-zu-Fahrzeug-(V2V)-Schnittstelle umfasst.

7. Verfahren nach einem der vorangegangenen Ansprüche, **dadurch gekennzeichnet, dass** der Lastkraftwagen (3) und das Führungsfahrzeug (2) zum Ausbilden des Fahrzeugverbunds (1) mechanisch miteinander verbunden werden.

8. Verfahren nach einem der vorangegangenen Ansprüche, **dadurch gekennzeichnet, dass** der Lastkraftwagen (3) und das Führungsfahrzeug (2) zum Ausbilden des Fahrzeugverbunds (1) in Form einer elektronischen Deichsel (4) miteinander verbunden werden.

9. Führungsfahrzeug (2) zum Auffahren auf und Abfahren von einer Autobahn (60) in einem Fahrzeugverbund (1) mit einem Lastkraftwagen (3),
wobei das Führungsfahrzeug (2) derartig ausgebildet ist,
- zum Auffahren auf die Autobahn (60):
am Beginn (11) eines Übergabebereichs (12) an den Lastkraftwagen (3) anzukoppeln und nach Ändern des Betriebsmodus des Lastkraftwagen (3) von einem geführten Betriebsmodus in einen automatisierten Betriebsmodus am Ende (14) des Übergabebereichs (12) wieder abzukoppeln; und
- zum Abfahren von der Autobahn (60):
am Beginn (16) eines weiteren Übergabebereichs (17) an den Lastkraftwagen (3) anzukoppeln und nach Ändern des Betriebsmodus des Lastkraftwagen (3) von dem automatisierten Betriebsmodus in den geführten Betriebsmodus am Ende (18) des Übergabebereichs (17) wieder abzukoppeln.

10. Lastkraftwagen (3) zum Auffahren auf und Abfahren von einer Autobahn (60) in einem Fahrzeugverbund (60) mit einem Führungsfahrzeug (2),
wobei der Lastkraftwagen (3) einen geführten Betriebsmodus und einen automatisierten Betriebsmodus aufweist und derartig ausgebildet ist,
- zum Auffahren auf die Autobahn (60):
am Beginn (11) eines Übergabebereichs (12) an das Führungsfahrzeug (2) anzukoppeln und nach Ändern des Betriebsmodus des Lastkraftwagen (3) von dem geführten Betriebsmodus in den automatisierten Betriebsmodus am Ende (14) des Übergabebereichs (12) wieder abzukoppeln; und
- zum Abfahren von der Autobahn (60):
am Beginn (16) eines weiteren Übergabebereichs (17) an das Führungsfahrzeug (2) anzukoppeln und nach Ändern des Betriebsmodus des Lastkraftwagen (3) von dem automatisierten Betriebsmodus in den geführten Betriebsmodus am Ende (18) des Übergabebereichs (17) wieder abzukoppeln.

## Claims

1. Method for driving onto and exiting a motorway (60) using a lorry (3), comprising the following steps:
- in order to drive onto the motorway (60):
making available a lead vehicle (2),
forming a vehicle train (1) by coupling the lead vehicle (2) to the lorry (3) at the start (11) of a transfer area (12),
guided driving onto the motorway (60),
changing an operating mode of the lorry (3) from a guided operating mode into an automated operating mode,
breaking up the vehicle train (1) by uncoupling the lead vehicle (2) from the lorry (3) at the end (14) of the transfer area (12); and
- in order to exit the motorway (60):
making available a lead vehicle (2),
forming a vehicle train (1) by coupling the lead vehicle (2) to the lorry (3) at the start (16) of a further transfer area (17),
changing an operating mode of the lorry (3) from an automatic operating mode into a guided operating mode,
guided exiting of the motorway (60),
breaking up of the vehicle train (1) by uncoupling the lead vehicle (2) from the lorry (3) at the end (18) of the further transfer area (17) .

2. Method according to Claim 1, **characterized in that** the start (11) of the transfer area (12) is positioned before a motorway entry slip road (9), wherein the driving onto the motorway (60) is controlled by the lead vehicle (2), and wherein the end (14) of the transfer area (12) is positioned on the motorway (60), and wherein the start (16) of the further transfer area (17) is positioned on the motorway (60), before a motorway exit (15), wherein the exiting of the motorway (60) is controlled by the lead vehicle (2), and wherein the end (18) of the further transfer area (17) is positioned after the motorway exit (15).

3. Method according to Claim 1, **characterized in that** the start (11) of the transfer area (12) and the start (16) of the further transfer area (17) are each positioned in a rest area or in an area on the motorway (60) which is specially provided for this purpose, and wherein the driving onto the motorway (60) and the exiting of the motorway (60) in the vehicle train (1) are each controlled by the lead vehicle (2).

4. Method according to Claim 1, **characterized in that** the transfer area (12) and the further transfer area (17) are positioned on the motorway (60).

5. Method according to one of the preceding claims, **characterized in that** the vehicle train (1) is embodied in such a way that a driver can change to and fro between the lead vehicle (2) and the lorry (3) by transferring between vehicles during travel, wherein after driving onto the motorway (60) and changing the guided operating mode into the automated operating mode the driver transfers from the lorry (3) into the lead vehicle (2), and wherein before exiting the motorway (60) and changing the automated operating mode into the guided operating mode a driver transfers from the lead vehicle (2) into the lorry (3).

6. Method according to one of the preceding claims, **characterized in that** the formation and breaking up of the vehicle train (1) comprises communicating and/or coordinating driving manoeuvres of the lorry (3) and of the lead vehicle (2) via a vehicle-to-vehicle (V2V) interface.

7. Method according to one of the preceding claims, **characterized in that** the lorry (3) and the lead vehicle (2) are connected to one another mechanically in order to form the vehicle train (1).

8. Method according to one of the preceding claims, **characterized in that** the lorry (3) and the lead vehicle (2) are connected to one another in the form of an electronic drawbar (4) in order to form the vehicle train (1) .

9. Guide vehicle (2) for driving onto and exiting a motorway (60) in a vehicle train (1) having a lorry (3), wherein
- in order to drive onto the motorway (60):
the lead vehicle (2) is designed to couple to the lorry (3) at the start (11) of a transfer area (12) and to decouple again after the changing of the operating mode of the lorry (3) from a guided operating mode into an automated operating mode at the end (14) of the transfer area (12); and
- in order to exit the motorway (60):
the lead vehicle (2) is designed to couple to the lorry (3) at the start (16) of a further transfer area (17) and to decouple again after the changing of the operating mode of the lorry (3) from the automated operating mode into the guided operating mode at the end (18) of the transfer area (17).

10. Lorry (3) for driving onto and exiting a motorway (60) in a vehicle train (60) with a lead vehicle (2), wherein the lorry (3) has a guided operating mode and an automated operating mode and
- in order to drive onto the motorway (60):
the lorry (3) is designed to couple to the lead vehicle (2) at the start (11) of a transfer area (12) and to decouple again after the changing of the operating mode of the lorry (3) from the guiding operating mode into the automated operating mode at the end (14) of the transfer area (12); and
- in order to exit the motorway (60):
the lorry (3) is designed to couple to the lead vehicle (2) at the start (16) of a further transfer area (17) and to decouple again after the changing of the operating mode of the lorry (3) from the automated operating mode into the guided operating mode at the end (18) of the transfer area (17).

## Revendications

1. Procédé pour amener un poids lourd (3) à entrer sur et sortir d'une autoroute (60), comprenant les étapes suivantes :
- pour entrer sur l'autoroute (60) :
la fourniture d'un véhicule d'assistance (2),
la constitution d'un peloton de véhicules (1) en attelant le véhicule d'assistance (2) au poids lourd (3) au début (11) d'une zone de transfert (12),
l'entrée assistée sur l'autoroute (60),
le changement d'un mode de fonctionnement du poids lourd (3) d'un mode de fonctionnement assisté à un mode de fonctionnement automatisé,
la dissociation du peloton de véhicules (1) en dételant le véhicule d'assistance (2) du poids lourd (3) à la fin (14) de la zone de transfert (12) ; et
- pour sortir de l'autoroute (60) :
la fourniture d'un véhicule d'assistance (2),
la constitution d'un peloton de véhicules (1) en attelant le véhicule d'assistance (2) au poids lourd (3) au début (16) d'une autre zone de transfert (17),
le changement d'un mode de fonctionnement du poids lourd (3) d'un mode de fonctionnement automatisé à un mode de fonctionnement assisté,
la sortie assistée de l'autoroute (60),
la dissociation du peloton de véhicules (1) en dételant le véhicule d'assistance (2) du poids lourd (3) à la fin (18) de l'autre zone de transfert (17).

2. Procédé selon la revendication 1, **caractérisé en ce que** le début (11) de la zone de transfert (12) est positionné avant une bretelle d'accès à l'autoroute (9), l'entrée sur l'autoroute (60) étant commandée par le véhicule d'assistance (2), et la fin (14) de la zone de transfert (12) étant positionnée sur l'autoroute (60), et le début (16) de l'autre zone de transfert (17) étant positionné sur l'autoroute (60) avant une sortie d'autoroute (15), la sortie de l'autoroute (60) étant commandée par le véhicule d'assistance (2), et la fin (18) de l'autre zone de transfert (17) étant positionnée après la sortie d'autoroute (15).

3. Procédé selon la revendication 1, **caractérisé en ce que** le début (11) de la zone de transfert (12) et le début (16) de l'autre zone de transfert (17) sont positionnés respectivement sur une aire de repos ou à un endroit spécialement prévu à cet effet au bord de l'autoroute (60), l'entrée sur l'autoroute (60) et la sortie de l'autoroute (60) dans le peloton de véhicules (1) étant respectivement commandées par le véhicule d'assistance (2).

4. Procédé selon la revendication 1, **caractérisé en ce que** la zone de transfert (12) et l'autre zone de transfert (17) sont positionnées sur l'autoroute (60).

5. Procédé selon l'une quelconque des revendications précédentes, **caractérisé en ce que** le peloton de véhicules (1) est constitué de telle sorte qu'un conducteur peut alterner entre le véhicule d'assistance (2) et le poids lourd (3) en changeant de place en cours de trajet, dans lequel, après l'entrée sur l'autoroute (60) et le changement du mode de fonctionnement assisté au mode de fonctionnement automatisé, le conducteur passe du poids lourd (3) au véhicule d'assistance (2), et dans lequel, avant la sortie de l'autoroute (60) et le changement du mode de fonctionnement automatisé au mode de fonctionnement assisté, un conducteur passe du véhicule d'assistance (2) au poids lourd (3).

6. Procédé selon l'une quelconque des revendications précédentes, **caractérisé en ce que** la constitution et la dissociation du peloton de véhicules (1) comprennent la communication et/ou la coordination de manœuvres de conduite du poids lourd (3) et du véhicule d'assistance (2) par une interface véhicule-véhicule (V2V).

7. Procédé selon l'une quelconque des revendications précédentes, **caractérisé en ce que** le poids lourd (3) et le véhicule d'assistance (2) sont reliés mécaniquement ensemble pour constituer le peloton de véhicules (1).

8. Procédé selon l'une quelconque des revendications précédentes, **caractérisé en ce que** le poids lourd (3) et le véhicule d'assistance (2) sont reliés ensemble sous la forme d'un timon électronique (4) pour constituer le peloton de véhicules (1).

9. Véhicule d'assistance (2) pour amener un poids lourd (3) à entrer sur et sortir d'une autoroute (60) dans un peloton de véhicules (1) comprenant un poids lourd (3), le véhicule d'assistance (2) étant réalisé de telle sorte que
- pour entrer sur l'autoroute (60) :
au début (11) d'une zone de transfert (12) il est attelé au poids lourd (3), et est de nouveau dételé après un changement du mode de fonctionnement du poids lourd (3) d'un mode de fonctionnement assisté à un mode de fonctionnement automatisé, à la fin (14) de la zone de transfert (12) ; et
- pour sortir de l'autoroute (60) :
au début (16) d'une autre zone de transfert (17) il est attelé au poids lourd (3), et est de nouveau dételé après un changement du mode de fonctionnement du poids lourd (3) du mode de fonctionnement automatisé au mode de fonctionnement assisté à la fin (18) de la zone de transfert (17).

10. Poids lourd (3) pour entrer sur et sortir d'une autoroute (60) dans un peloton de véhicules (60) comprenant un véhicule d'assistance (2),
le poids lourd (3) présentant un mode de fonctionnement assisté et un mode de fonctionnement automatisé et étant réalisé de telle sorte que
- pour entrer sur l'autoroute (60) :
au début (11) d'une zone de transfert (12) il est attelé au véhicule d'assistance (2), et est de nouveau dételé après un changement du mode de fonctionnement du poids lourd (3) d'un mode de fonctionnement assisté à un mode de fonctionnement automatisé, à la fin (14) de la zone de transfert (12) ; et
- pour sortir de l'autoroute (60) :
au début (16) d'une autre zone de transfert (17) il est attelé au véhicule d'assistance (2), et est de nouveau dételé après un changement du mode de fonctionnement du poids lourd (3) du mode de fonctionnement automatisé au mode de fonctionnement assisté à la fin (18) de la zone de transfert (17).
